# EUROPÄISCHE PATENTANMELDUNG

(11) **EP 1 030 526 A2**
(43) Veröffentlichungstag der Anmeldung: **23.08.2000**
(21) Anmeldenummer: 00102587.3
(22) Anmeldetag: 07.02.2000
(51) Int. Cl.: H04Q 3/00

(54) **Verfahren zur Lastverteilung**

(30) Priorität: 18.02.1999 DE 19906806
(71) Anmelder: SIEMENS AKTIENGESELLSCHAFT, 80333 München (DE)
(72) Erfinder: Gradischnig, Klaus David, 82131 Gauting (DE)

(57) **Zusammenfassung**

Die vorliegende Erfindung betrifft eine Steuervorrichtung zum Steuern der Übertragung eines Datenstromes von Signalisiermeldungen in einem Zeichengabesystem mit einer Empfangseinrichtung (1) zum Empfangen eines Datenstromes von Signalisiermeldungen, einer ersten Einrichtung (2) zur ersten gleichmäßigen Unterteilung des empfangenen Datenstromes von Signalisiermeldungen durch eine erste Adressierung des Datenstromes von Signalisiermeldungen auf der Basis eines vorgegebenen Feldes für die Auswahl eines Übertragungsabschnittes (5a, 5b, ..., 5n) zur Übertragung der Signalisiermeldungen, einer zweiten Einrichtung (3) zur weiteren gleichmäßigen Unterteilung des Datenstromes von Signalisiermeldungen durch eine zusätzliche Adressierung unter Verwendung von im Zeichengabesystem bekannten Adreßinformationen erreicht wird und einer Übertragungseinrichtung (4) zur Übertragung des weiter unterteilten Datenstromes von Signalisiermeldungen zu den Übertragungsabschnitten (5a, 5b, ..., 5n), die durch eine aus der ersten und der zusätzlichen Adressierung hervorgehenden Adressierung vorgegeben sind.

Die vorliegende Erfindung betrifft außerdem ein Verfahren zur Anwendung in einer Steuervorrichtung zum Steuern der Übertragung eines Datenstromes von Signalisiermeldungen.

## Beschreibung

Die vorliegende Erfindung betrifft eine Steuervorrichtung für die Übertragung von Zeichengabemeldungen in einem Zeichengabesystem und ein in dieser Steuervorrichtung angewendetes Verfahren zur Übertragung von Zeichengabemeldungen in einem Zeichengabesystem.

Für die Zeichengabe zwischen den Vermittlungsknoten eines öffentlichen Datenübertragungsnetzes wird oft ein Zeichengabenetz im Zeichengabesystem Nr. 7 verwendet. Unter Zeichengabe versteht man den Austausch von Zeichengabemeldungen, auch Signalisiermeldungen genannt, zwischen Vermittlungsknoten bzw. Endgeräten. Signalisiermeldungen werden für die Verbindungssteuerung wie z.B. für den Aufbau, das Halten und das Auslösen einer Verbindung benötigt. Das Zeichengabenetz ist dabei oft dem Nutzdatennetz überlagert, d.h. für die physikalische Übertragung der Signalisiermeldungen werden die Übertragungswege des Nutzkanalnetzes mitbenutzt, auf den höheren Schichten jedoch sind die Netze jedoch völlig getrennt.

Das Signalisiernetz besteht dabei aus den Signalisier-Punkten (Signalling Point, SP) und den Signalisier-Transferpunkten (Signalling Transfer Point, STP). Die Signalisier-Punkte dienen zur Interaktion zwischen dem steuernden Zeichengabenetz und dem gesteuerten Nutzkanalnetz, die Signalisier-Transferpunkte dienen nur der Weiterleitung von Signalisiermeldungen.

Ein Teil des Zeichengabesystems Nr. 7, der die transportorientierten Funktionen des Zeichengabesystems bereitstellt, wird als Message Transfer Part (MTP) bezeichnet. Im Message Transfer Part wird der Datenstrom von Signalisiermeldungen auf einzelne Übertragungsabschnitte (Links) in einem Satz von Übertragungsabschnitten (Linkset) verteilt. Beim derzeitigen Stand der Technik wird dabei der Gesamtverkehr von Signalisiermeldungen gemäß ITU (International Telecommunication Union) in 16 Abschnitte zur Verteilung auf die einzelnen Übertragungsabschnitte unterteilt. Diese Verteilung (Lastverteilung) ist dadurch bedingt, daß zur Adressierung der Abschnitte des Gesamtverkehrs die 4 Bit des Signalling Link Selection (SLS) Feldes der Signalisiermeldungen verwendet werden.

Jedem Datenpaket des Datenstromes von Signalisiermeldungen ist aufgrund des SLS-Feldes eine von 16 möglichen Adressen zugewiesen. Die Datenpakete, die im SLS-Feld jeweils die gleiche Adresse besitzen, bilden einen Abschnitt des Datenstromes, der somit 16 Abschnitte umfaßt. Die "Unterteilung" des Datenstromes von Signalisiermeldungen in diese 16 Abschnitte erfolgt somit aufgrund der vom SLS-Feld vorgegebenen Adressierung.

Gemäß ANSI (American National Standards Institute) erfolgt die Unterteilung des Datenstromes von Signalisiermeldungen mit 5 bzw. 8 Bit des Signalling Link Selection Feldes, das bedeutet eine Unterteilung in 32 bzw. 256 Abschnitte.

Beide Systeme, nach ITU und nach ANSI, gehen davon aus, daß die möglichen Werte des Signalling Link Selection Feldes in etwa gleich verteilt sind. Das muß von den Benutzern des Message Transfer Part sichergestellt werden.

Eine Adressierung gemäß ITU hat den Nachteil, daß nur dann eine gleichmäßige Verteilung des Gesamtverkehrs von Signalisiermeldungen stattfinden kann, wenn eine Anzahl von 2ⁿ Übertragungsabschnitten in einem Satz von Übertragungsabschnitten vorhanden sind, also 1, 2, 4, 8 oder 16. Bei einer Anzahl von z.B. fünf Übertragungsabschnitten in einem Satz von Übertragungsabschnitten wird bei ansonsten gleichem Gesamtverkehr von Signalisiernachrichten der am höchsten belastete Übertragungsabschnitt genauso belastet sein wie in einem Satz von Übertragungsabschnitten mit vier Übertragungsabschnitten, nämlich mit 1/4 (=4/16) des Gesamtverkehrs, die anderen Übertragungsabschnitten können jedoch aufgrund der Adressierung jeweils nur mit maximal 3/16 des Gesamtverkehrs belastet werden.

Im Message Transfer Part kommen Kontrollmethoden zur Anwendung (sog. Congestion-Kontrollmethoden), die eine Überlastung der Sätze von Übertragungsabschnitten verhindern. Diese Kontrollmethoden werden ggf. von dem am meisten belasteten Übertragungsabschnitt ausgelöst und dadurch wird bei ungleichmäßiger Auslastung bzw. Lastverteilung eine weitere Auslastung der anderen Übertragungsabschnitte verhindert.

Ein Satz von Übertragungsabschnitten mit fünf Übertragungsabschnitten hat also bei der gegebenen Adressierungsmethode mit 4 Bit gemäß ITU keine höhere verwendbare Übertragungskapazität als ein Satz von Übertragungsabschnitten mit nur vier Übertragungsabschnitten.

Bei der Adressierungsmethode gemäß ANSI sind diese Probleme - speziell bei der Verwendung von 8 Bit - wesentlich geringer, jedoch ist eine Umstellung auf diese Adressierung aufgrund der unterschiedlichen Nachrichtenformate in MTP-Netzen, die nach dem ITU-Standard aufgebaut sind, nicht anwendbar. Eine Umstellung auf das Adressierungsverfahren nach ANSI würde eine kostspielige und praktisch nicht mögliche Umstellung des gesamten MTP-Netzes mit sich bringen.

Aufgabe der vorliegenden Erfindung ist somit eine Steuervorrichtung gemäß dem Oberbegriff des beigefügten Anspruches 1 bzw. ein Verfahren gemäß dem Oberbegriff des beigefügten Anspruches 9 bereitzustellen, die eine gleichmäßige Verteilung eines Datenstromes von Signalisiermeldungen auf die einzelnen Übertragungsabschnitte in einem Satz von Übertragungsabschnitten ermöglichen.

Diese Aufgabe wird durch eine Steuervorrichtung zum Steuern der Übertragung eines Datenstromes von Signalisiermeldungen in einem Zeichengabesystem mit den Merkmalen des beigefügten Anspruches 1 und einem Verfahren zur Steuerung der Übertragung eines Datenstromes von Signalisiermeldungen mit den Merkmalen des beigefügten Anspruches 9 gelöst.

Durch die gemäß der Erfindung vorgesehene zweite Unterteilung des Datenstromes von Signalisiermelungen wird erreicht, daß in einem Satz von Übertragungsabschnitten mit z.B. fünf Übertragungsabschnitten eine gleichmäßigere Auslastung der einzelnen Übertragungsabschnitte stattfindet. Durch eine gleichmäßigere Auslastung der einzelnen Übertragungsabschnitte wird eine höhere, nutzbare Übertragungskapazität des verwendeten Satzes von Übertragungsabschnitten erreicht wie in dem folgenden Rechenbeispiel erläutert wird:

Bei einer Unterteilung des Gesamtstromes von Signalisiermeldungen in 16 gleich große Teile und einer Verteilung des Datenstromes von Signalisiermeldungen auf fünf Übertragungsabschnitte ergibt sich folgende Auslastung der einzelnen Übertragungsabschnitte: Der höchstbelastete Übertragungsabschnitt wird mit 4/16 des Gesamtdatenstromes von Signalisiermeldungen belastet während die anderen vier Übertragungsabschnitte mit maximal 3/16 des Gesamtdatenstromes von Signalisiermeldungen belastet werden.

Wird jedoch der Gesamtstrom von Signalisiermeldungen in z.B. 64 gleich große Teile unterteilt und auf 5 Übertragungsabschnitte verteilt, dann können vier Übertragungsabschnitten mit 13/64 und ein Übertragungsabschnitt mit 12/64 des Gesamtdatenstromes von Signalisiermeldungen belastet werden. Dadurch, daß die bei dieser Unterteilung am höchsten belasteten Übertragungsabschnitte weniger als ein Viertel des Gesamtdatenstromes von Signalisiermeldungen verarbeiten müssen, ergibt sich eine höhere nutzbare Gesamtkapazität zur Übertragung von Signalisiermeldungen.

Vorteilhafte Ausgestaltungen der Erfindung sind in den Unteransprüchen 2 bis 8 bzw. 10 bis 19 wiedergegeben.

Das für die erste Unterteilung des Datenstromes von Signalisiermeldungen benötigte Feld ist in dem Signalling Link Selection Feld der Signalisiermeldungen im Zeichengabesystem Nr. 7 enthalten.

In einer ersten Ausgestaltung der Erfindung wird der empfangene Datenstrom von Signalisiermeldungen zuerst durch eine erste Adressierung in im Wesentlichen gleich große Abschnitte auf der Basis eines vorgegebenen Feldes für die Auswahl eines Übertragungsabschnittes zur Übertragung von Signalisiermeldungen unterteilt und dann durch eine zusätzliche Adressierung weiter in im Wesentlichen gleich große Abschnitte unterteilt.

In einer anderen Ausgestaltung der Erfindung erfolgt zuerst die Unterteilung des Datenstromes durch die zusätzliche Adressierung unter Verwendung von im Zeichengabesystem bekannten Informationen und dann erfolgt die Unterteilung des Datenstromes aufgrund der Adressierung durch den Inhalt eines vorgegebenen Feldes.

In einer weiteren Ausgestaltung der Erfindung wird das vorgegebene Feld für die erste Adressierung des Datenstromes von Signalisiermeldungen durch die zusätzliche Adressierung um ein Bit erweitert, und dann erfolgt die Unterteilung des Datenstromes von Signalisiermeldungen.

In einer bevorzugten Ausgestaltung wird das erfindungsgemäße Verfahren in einer erfindungsgemäßen Steuervorrichtung angewendet, die in einem Signalisier-Transterpunkt (Signalling Transfer Point, STP) enthalten ist. Der Signalisier-Transferpunkt in einem Signalisiernetz dient zum Übertragen und Verteilen von Signalisiermeldungen.

Weiterhin wird vorteilhafterweise in der erfindungsgemäßen Steuervorrichtung zum Steuern der Übertragung eines Datenstromes von Signalisiermeldungen ein Verfahren angewendet, in dem die zweite Unterteilungseinrichtung die zweite Unterteilung durch eine zusätzliche Adressierung des Datenstromes von Signalisiermeldungen durch das Hinzufügen von mindestens einem Bit von bekannten Adreßinformationen vornimmt.

In einer weiteren Ausgestaltung der Erfindung wird das für die zusätzliche Unterteilung des Datenstromes von Signalisiermeldungen benötigte mindestens eine Bit bekannter Adreßinformationen aus der Ursprungsadresse der Signalisiermeldungen entnommen.

Das für die zweite Unterteilung des Datenstromes von Signalisiermeldungen benötigte mindestens eine Bit kann ebenfalls aus der Zieladresse der Signalisiermeldungen entnommen werden.

In einer weiteren vorteilhaften Ausgestaltung der Erfindung wird eine Exklusiv-Oder Verknüpfung von mindestens einem Bit der Ursprungsadresse und mindestens einem Bit der Zieladresse vorgenommen. Durch die Exklusiv-Oder Verknüpfung von je mindestens einem Bit von Ursprungs- und Zieladresse der Signalisiermeldungen wird erreicht, daß die Unterteilung des Datenstromes von Signalisiermeldungen möglichst gleich verteilt auf die Übertragungsabschnitte erfolgt, unabhängig davon, ob die Ursprungsadresse oder die Zieladresse stärker variiert.

Die vorliegende Erfindung wird nachfolgend anhand bevorzugter Ausführungsbeispiele unter Bezug auf die beigefügten Zeichnungen näher erläutert in denen zeigen
Fig. 1 zeigt ein Blockdiagramm einer Steuervorrichtung gemäß der vorliegenden Erfindung
Fig. zeigt ein Beispiel einer bekannten Lastverteilung von Signalisiermeldungen auf 5 Übertragungsabschnitte
Fig. 3 zeigt ein Beispiel einer erfindungsgemäßen Lastverteilung von Signalisiermeldungen auf 5 Übertragungsabschnitte

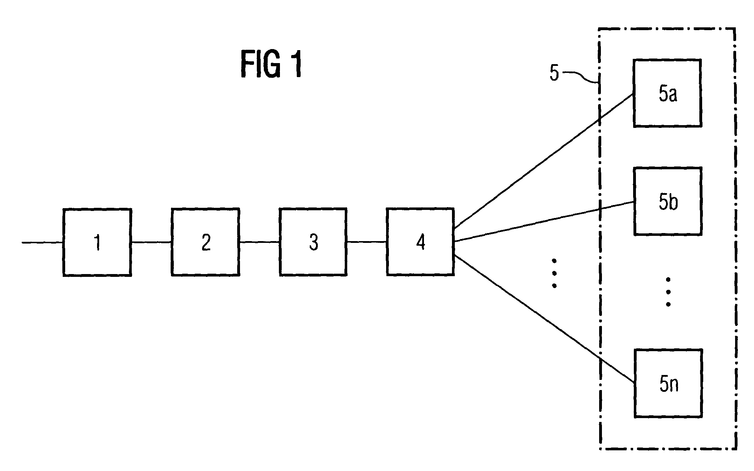

Wie in Fig. 1 dargestellt, umfaßt die erfindungsgemäße Steuervorrichtung zum Steuern der Übertragung eines Datenstromes von Signalisiermeldungen in einem Zeichengabesystem eine Empfangseinrichtung 1 zum Empfangen eines Datenstromes von Signalisiermeldungen, eine erste Einrichtung 2 zur ersten gleichmäßigen Unterteilung des empfangenen Datenstromes, eine zweite Einrichtung 3 zur weiteren, zweiten gleichmäßigen Unterteilung des Datenstromes von Signalisiermeldungen und eine Übertragungseinrichtung 4 zur Übertragung des weiter unterteilten Datenstromes von Signalisiermeldungen zu den einzelnen Übertragungsabschnitten 5a bis 5n in einem Satz von Übertragungsabschnitten 5.

Der von der Empfangseinrichtung 1 empfangene Datenstrom von Signalisiermeldungen wird von der ersten Einrichtung 2 zur ersten Unterteilung des Datenstromes, bedingt durch die Adressierung mittels 4 Bit des Signalling Link Selection Feldes nach ITU, in 16 gleich große Teile unterteilt. Das erfindungsgemäße Verfahren sieht nun vor, eine weitere gleichmäßige Unterteilung des Datenstromes von Signalisiermeldungen vorzunehmen.

Die zweite Unterteilung des Datenstromes von Signalisiermeldungen in im Wesentlichen gleich große Abschnitte wird in der zweiten Einrichtung 3 zur weiteren Unterteilung des Datenstromes von Signalisiermeldungen vorgenommen. Die weitere Unterteilung erfolgt dabei durch eine zusätzlich Adressierung des Datenstromes von Signalisiermeldungen, indem die bestehende Adressierung des Signalling Link Selection Feldes um mindestens 1 Bit erweitert wird. Vorteilhafterweise wird die bestehende Adressierung um 2 Bit erweitert. Bei einer daraus resultierenden Adressierung des Datenstromes von Signalisiermeldungen mit insgesamt 6 Bit ergibt sich eine Unterteilung in 2⁶=64 Abschnitte.

Die verwendeten Mittel, mit denen die weitere Unterteilung des Datenstromes von Signalisiermeldungen erreicht wird, können allgemein von der Lage des jeweiligen Knotens im Message Transfer Netz, von der verwendeten Numerierungsstrategie der einzelnen Zeichengabepunkte oder auch von der gewünschten Gleichmäßigkeit der Lastverteilung abhängen.

In einem bevorzugten Ausführungsbeispiel wird dabei zur Generierung der zusätzlichen Adressierung von zwei Bit die Urprungs- und Zieladresse der Signalisiermeldungen verwendet. Vorteilhafterweise werden die beiden niedrigstwertigen Bits von Originating Point Code (OPC, Ursprungsadresse) und Destination Point Code (DPC, Zieladresse) der Signalisiermeldungen mittels Exklusiv-Oder-Verknüpfung miteinander Verknüpft.

Der MTP (Message Transfer Part) gewährleistet mit sehr hoher Wahrscheinlichkeit, daß Nachrichten von einem bestimmten Ursprung zu einem bestimmten Ziel, welche dieselben SLS-Werte (Signalling Link Selection-Werte) besitzen, in derselben Reihenfolge beim Ziel ankommen, mit der sie vom Ursprung ausgesandt wurden. Dies wird dadurch erreicht, daß diese Nachrichten durch das Netz alle denselben physikalischen Weg, d.h. dieselben Übertragungsstrecken benutzen. Für die zusätzliche Adressierung bieten sich daher Ursprungs- bzw. Zieladresse an, da dabei diese Eigenschaft des MTP nicht geändert wird, da die zusätzliche Aufteilung des Datenstromes Teilströme mit gleichem SLS-Wert und gleichen Ursprungs- bzw. Zieladressen nicht weiter unterteilt.

Durch die Exklusive-Oder Verknüpfung wird erreicht, daß die Variabilität der Funktion, d.h. eine gleichmäßige Verteilung der Adressierung, unabhängig davon gewährleistet ist, ob das erfindungsgemäße Verfahren urprungsnah oder zielnah angewendet wird. Eine ursprungsnahe Anwendung des Verfahren ist gegeben, wenn die Ursprungsadressen der unterschiedlichen Signalisiermeldungen annähernd gleich sind und die Zieladressen der Signalisiermeldungen stärker variieren. Der umgekehrte Fall ist bei einer zielnahen Adressierung von Signalisiermeldungen gegeben; hier variieren die Ursprungsadressen der Signalisiermeldungen stärker als die Zieladressen.

Nach der zweiten Unterteilung des Datenstromes von Signalisiermeldungen in im Wesentlichen gleich große Abschnitte erfolgt die Übertragung der Signalisiermeldungen mittels der Übertragungseinrichtung 4 zu den einzelnen Übertragungsabschnitten 5a, 5b, ..., 5n, die alle in einer gemeinsamen Gruppe von Übertragungsabschnitten 5 enthalten sind.

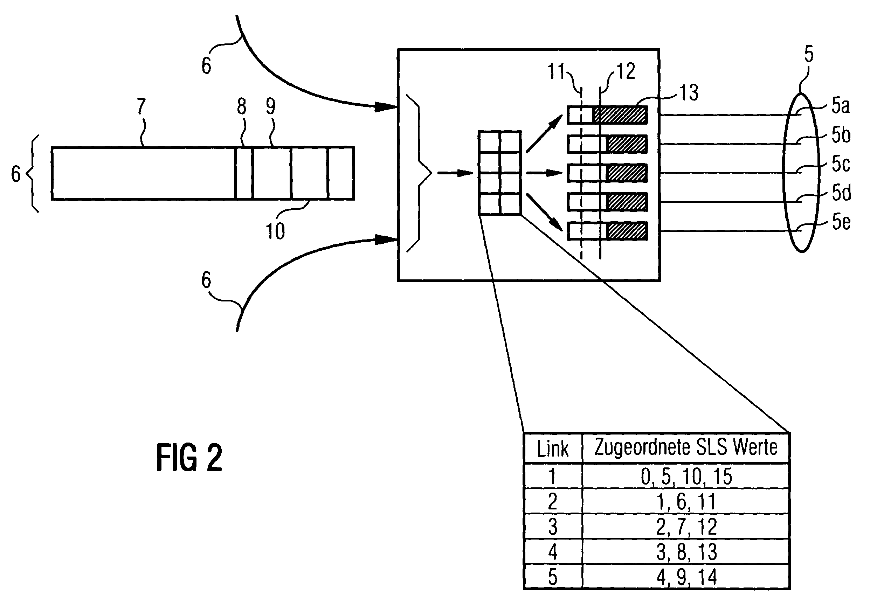

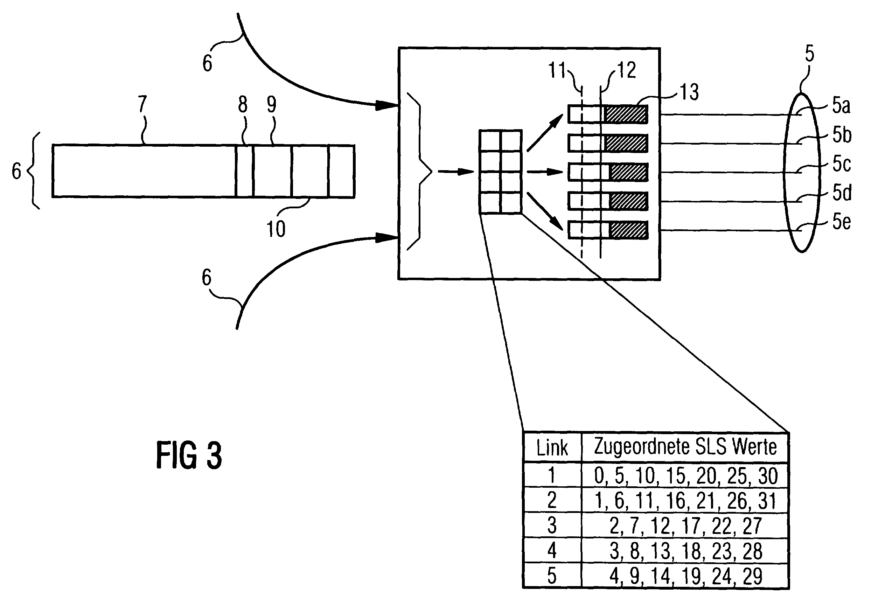

In den Figuren 2 und 3 wird anhand von Beispielen erläutert, wie sich eine Lastverteilung des Gesamtdatenstromes von Signalisiermeldungen 6, die unterschiedlichen Ursprungs sein können, auf die einzelnen Übertragungsabschnitte 5a, 5b, ..., 5n in einem Satz von Übertragungsabschnitten 5 mit fünf Übertragungsabschnitten ergibt. Dabei wird in Fig. 2 auf die Lastverteilung bei der bekannten Adressierung eingegangen und in Fig. 3 auf die Lastverteilung bei einer erfindungsgemäßen Adressierung, um die Vorteile der erfindungsgemäßen Steuervorrichtung und des erfindungsgemäßen Verfahrens zur Lastverteilung zu verdeutlichen.

In Fig. 2 wird bei der bekannten Lastverteilung der Datenstrom von Signalisiermeldungen 6 bedingt durch die 4 Bit des Signalling Link Selection Feldes 8 in sechzehntel Teile des gesamten Datenstromes 6 unterteilt. Eine gleichmäßige Verteilung des gesamten Datenstromes 6 von Signalisiermeldungen findet jedoch nur bei einer Anzahl von 2ⁿ Übertragungsabschnitten 5a, ..., 5n (im Folgenden mit Links bezeichnet), also z.B. bei vier Übertragungsabschnitten, in einem Satz von Übertragungsabschnitten 5 (im Folgenden mit Linkset bezeichnet) statt.

Wird jedoch, wie in Fig. 2 dargestellt, der nach ITU in sechzehntel Teile unterteilte Datenstrom von Signalisiermeldungen 6 auf fünf Links 5a bis 5e verteilt, ergibt sich eine ungleichmäßige Lastverteilung des Datenstromes, wobei der am meisten belastete Link genauso belastet ist, wie bei einem Linkset 5 mit nur 4 Links. In einem Linkset mit 5 Links werden vier Links maximal mit je 3/16 und ein Link mit maximal 4/16 des Gesamtstromes von Signalisiermeldungen belastet. Der am meisten belastete Link befindet sich mit seiner Auslastung bereits innerhalb der Überlastschwellen 11 und 12, während die anderen Links diesen Bereich noch nicht erreicht haben. Dieser Link löst ggf. bei steigender Last Kontrollen aus (sog. Congestion-Kontrollmethoden), die sich jedoch auf das jeweilige Linkset 5 beziehen. Dadurch wird dann eine weitere Auslastung der anderen Links verhindert, obwohl diese noch zusätzlichen Verkehr annehmen könnten. (Sh. auch ITU-T Empfehlung E.733).

Wird dagegen, wie in Fig. 3 dargestellt, der Datenstrom von Signalisiermeldungen 6 unter Anwendung des erfindungsgemäßen Verfahrens in der erfindungsgemäßen Steuervorrichtung unter Verwendung von Ursprungs- und Zieladresse 9 und 10 (OPC bzw. DPC) in z.B. 32 gleich große Abschnitte unterteilt, dann ergibt sich bei einer Aufteilung des gesamten Datenstromes 6 auf z.B. fünf Links 5a bis 5e eine gleichmäßigere Lastverteilung als bei einer Unterteilung des Datenstromes in 16 gleich große Abschnitte. Durch eine Aufteilung des gesamten Datenstromes in 32 Teile ergibt sich dann eine Auslastung wie folgt: Es werden 2 Links mit je 7/32 und 3 Links mit 6/32 des gesamten Datenstromes von Signalisiermeldungen 6 belastet; die am meisten belasteten Links bekommen also nur 16,66 % mehr Last als die anderen Links. Wie zu sehen ist, werden die am meisten belasteten Links weniger belastet als bei einer Aufteilung des Datenstromes auf nur 4 Links. Dadurch ergibt sich eine höhere, nutzbare Gesamtübertragungskapazität eines Linksets 5 mit 5 Links 5a bis 5e gegenüber einem Linkset 5 mit 4 Links 5a bis 5d.

Bei Gleichverteilung der ursprünglichen SLS-Werte 8 und gleichviel Verkehr von und zu allen Ursprungsadressen 9 über den betrachteten Linkset 5 wird bei einer XOR-Verknüpfung des niedrigstwertigen Bit von Ursprung- und Zieladresse 9 und 10 und der Verwendung des Resultates als 5. SLS Bit in diesem Beispiel eine Gleichverteilung der erweiterten SLS-Werte erreicht.

Die Verteilung des gesamten Datenstromes von Signalisiermeldungen wird umso gleichmäßiger auf die einzelnen Links eines Linksets verteilt, je höher die Auflösung der Unterteilung des Datenstromes von Signalisiermeldungen ist.

## Patentansprüche

1. Steuervorrichtung zum Steuern der Übertragung eines Datenstroms von Signalisiermeldungen in einem Zeichengabesystem mit
mindestens einer Empfangseinrichtung (1) zum Empfangen eines Datenstromes von Signalisiermeldungen und
einer ersten Einrichtung (2) zur ersten gleichmäßigen Unterteilung des empfangenen Datenstromes von Signalisiermeldungen in im Wesentlichen gleich große Abschnitte indem die Datenpakete des Datenstromes durch den Inhalt eines vorgegebenen Feldes eine erste Adressierung erhalten, wobei die Auswahl eines Übertragungsbschnittes (5a, 5b, ...) für das Datenpaket gemäß dieser Adressierung erfolgt,
**gekennzeichnet durch**
eine zweite Einrichtung (3) zur zweiten Unterteilung des Datenstromes von Signalisiermeldungen in im Wesentlichen gleich große Abschnitte, wobei die weitere Unterteilung des Datenstromes von Signalisiermeldungen durch eine zusätzliche Adressierung unter Verwendung von im Zeichengabesystem bekannten Adreßinformationen erfolgt und
eine Übertragungseinrichtung (4) zur Übertragung des weiter unterteilten Datenstromes von Signalisiermeldungen zu den Übertragungsabschnitten (5a, 5b, ...), die durch eine aus der ersten und der zusätzlichen Adressierung hervorgehenden Adressierung vorgegeben sind.

2. Steuervorrichtung zum Steuern der Übertragung eines Datenstromes von Signalisiermeldungen in einem Zeichengabesystem gemäß Anspruch 1,
**dadurch gekennzeichnet,**
daß das vorgegebene Feld für die erste Adressierung zur ersten Unterteilung des Datenstromes von Signalisiermeldungen im Signalling Link Selection Feld des Zeichengabesystems Nr. 7 enthalten ist.

3. Steuervorrichtung zum Steuern der Übertragung eines Datenstromes von Signalisiermeldungen in einem Zeichengabesystem gemäß Anspruch 1 oder 2,
**dadurch gekennzeichnet,**
daß sie in einem Signalisier-Transferpunkt, der der Weiterleitung von Signalisiermeldungen dient, enthalten ist.

4. Steuervorrichtung zum Steuern der Übertragung eines Datenstromes von Signalisiermeldungen in einem Zeichengabesystem gemäß einem der Ansprüche 1 bis 3,
**dadurch gekennzeichnet,**
daß die zweite Unterteilungseinrichtung (3) eine zusätzliche Adressierung des Datenstromes von Signalisiermeldungen durch Hinzufügen von mindestens einem Bit der bekannten Adreßinformationen vornimmt.

5. Steuervorrichtung zum Steuern der Übertragung eines Datenstromes von Signalisiermeldungen in einem Zeichengabesystem gemäß einem der Ansprüche 1 bis 4,
**dadurch gekennzeichnet,**
daß die für die zusätzliche Adressierung verwendeten, bekannten Adreßinformationen in der Ursprungsadresse der Signalisiermeldungen enthalten sind.

6. Steuervorrichtung zum Steuern der Übertragung eines Datenstromes von Signalisiermeldungen in einem Zeichengabesystem gemäß einem der Ansprüche 1 bis 4,
**dadurch gekennzeichnet,**
daß die für die zusätzliche Adressierung verwendeten, bekannten Adreßinformationen in der Zieladresse der Signalisiermeldungen enthalten sind.

7. Steuervorrichtung zum Steuern der Übertragung eines Datenstromes von Signalisiermeldungen in einem Zeichengabesystem gemäß einem der Ansprüche 1 bis 6,
**dadurch gekennzeichnet,**
daß die zweite Einrichtung bei der zusätzlichen Adressierung eine Verknüpfung von mindesten einem Bit der Ursprungsadresse mit mindesten einem Bit der Zieladresse durchführt.

8. Steuervorrichtung zum Steuern der Übertragung eines Datenstromes von Signalisiermeldungen in einem Zeichengabesystem gemäß Anspruch 7,
**dadurch gekennzeichnet,**
daß die zweite Einrichtung bei der zusätzlichen Adressierung eine Exklusiv-Oder Verknüpfung von dem mindestens einem Bit der Ursprungsadresse und dem mindestens einem Bit der Zieladresse durchführt.

9. Verfahren zur Steuerung der Übertragung eines Datenstromes von Signalisiermeldungen in einem Zeichengabesystem in einer Steuervorrichtung zum Steuern der Übertragung eines Datenstromes von Signalisiermeldungen mit den Schritten
a) Empfangen eines Datenstromes von Signalisiermeldungen und
b) erstes Unterteilen des Datenstromes von Signalisiermeldungen in im Wesentlichen gleich große Abschnitte indem die Datenpakete des Datenstromes durch den Inhalt eines vorgegebenen Feldes eine erste Adressierung erhalten, wobei die Auswahl eines Übertragungsabschnittes für das Datenpaket gemäß dieser Adressierung erfolgt,
**gekennzeichnet durch folgende zusätzliche Schritte**
c) zweite Unterteilung des Datenstromes von Signalisiermeldungen in im Wesentlichen gleich große Abschnitte durch eine zusätzliche Adressierung unter Verwendung vom im Zeichengabesystem bekannten Adreßinformationen und
d) Übertragung des weiter unterteilten Datenstromes von Signalisiermeldungen zu den durch eine aus der ersten und der zusätzlichen Adressierung hervorgehenden Adressierung vorgegebenen Übertragungsabschnitten (5a, 5b, ...).

10. Verfahren zur Steuerung der Übertragung eines Datenstromes von Signalisiermeldungen in einem Zeichengabesystem gemäß Anspruch 9
**dadurch gekennzeichnet,**
daß Schritt b) vor Schritt c) ausgeführt wird.

11. Verfahren zur Steuerung der Übertragung eines Datenstromes von Signalisiermeldungen in einem Zeichengabesystem gemäß Anspruch 9
**dadurch gekennzeichnet,**
daß Schritt c) vor Schritt b) ausgeführt wird.

12. Verfahren zur Steuerung der Übertragung eines Datenstromes von Signalisiermeldungen in einem Zeichengabesystem gemäß Anspruch 9
**dadurch gekennzeichnet,**
daß Schritt b) und Schritt c) gleichzeitig ausgeführt werden indem das vorgegebene Feld um mindestens ein Bit erweitert wird, und dann der Datenstrom von Signalisiermeldungen mittels Adressierung durch das erweiterte Feld unterteilt wird.

13. Verfahren zur Steuerung der Übertragung eines Datenstromes von Signalisiermeldungen in einem Zeichengabesysten gemäß einem der Ansprüche 9 bis 12
**dadurch gekennzeichnet,**
daß das Verfahren im Zeichengabesystem Nr. 7 angewendet wird.

14. Verfahren zur Steuerung der Übertragung eines Datenstromes von Signalisiermeldungen in einem Zeichengabesystem gemäß einem der Ansprüche 9 bis 13,
**dadurch gekennzeichnet,**
daß das Verfahren in einem Signalisier-Transferpunkt, der der Weiterleitung von Signalisiermeldungen dient, angewendet wird.

15. Verfahren zur Steuerung der Übertragung eines Datenstromes von Signalisiermeldungen in einem Zeichengabesystem gemäß Anspruch 9, 10, 13 oder 14,
**dadurch gekennzeichnet,**
daß die erste Adressierung des Datenstromes von Signalisiermeldungen durch die 4 Bit des Signalling Link Selection Feldes der Signalisiermeldungen erfolgt.

16. Verfahren zur Steuerung der Übertragung eines Datenstromes von Signalisiermeldungen in einem Zeichengabesystem gemäß einem der Ansprüche 9 bis 15,
**dadurch gekennzeichnet,**
daß die zusätzliche Adressierung durch Hinzufügen von mindestens einem Bit der bekannten Adreßinformationen vorgenommen wird.

17. Verfahren zur Steuerung der Übertragung eines Datenstromes von Signalisiermeldungen in einem Zeichengabesystem gemäß Anspruch 16,
**dadurch gekennzeichnet,**
daß die zur zusätzlichen Adressierung verwendeten, bekannten Adreßinformationen in der Ursprungsadresse der Signalisiermeldungen enthalten sind.

18. Verfahren zur Steuerung der Übertragung eines Datenstromes von Signalisiermeldungen in einem Zeichengabesystem gemäß Anspruch 16,
**dadurch gekennzeichnet,**
daß die zur zusätzlichen Adressierung verwendeten, bekannten Adreßinformationen in der Zieladresse der Signalisierungsnachrichten enthalten sind.

19. Verfahren zur Steuerung der Übertragung eines Datenstromes von Signalisiermeldungen in einem Zeichengabesystem gemäß einem der Ansprüche 9 bis 18,
**dadurch gekennzeichnet,**
daß bei der zusätzlichen Adressierung eine Verknüpfung von mindesten einem Bit der Ursprungsadresse mit mindestens einem Bit der Zieladresse stattfindet.

20. Verfahren zur Steuerung der Übertragung eines Datenstromes von Signalisiermeldungen in einem Zeichengabesystem gemäß Anspruch 19,
**dadurch gekennzeichnet,**
daß die Verknüpfung von dem mindestens einem Bit der Ursprungsadresse mit dem mindesten einem Bit der Zieladresse eine Exklusiv-Oder Verknüpfung ist.
